# EUROPÄISCHE PATENTANMELDUNG

(11) **EP 4 160 853 A1**
(43) Veröffentlichungstag der Anmeldung: **05.04.2023**
(21) Anmeldenummer: 21199967.7
(22) Anmeldetag: 29.09.2021
(51) Int. Cl.: H02J 3/48, H02J 3/14, H02J 3/38

(54) **VERFAHREN FÜR EINE NETZFREQUENZREGELUNG EINES ELEKTRISCHEN ENERGIENETZES UND KONTROLLANORDNUNG**

(71) Anmelder: Siemens Aktiengesellschaft, 80333 München (DE)
(72) Erfinder: Hörmann, Walter, 2201 Gerasdorf bei Wien (AT); Heyde, Chris Oliver, 91058 Erlangen (DE); Wiest, Pascal, 90478 Nürnberg (DE)
(74) Vertreter: Siemens Patent Attorneys

(57) **Zusammenfassung**

Gegenstand der vorliegenden Erfindung ist ein Verfahren für eine Netzfrequenzregelung eines elektrischen Energienetzes, gekennzeichnet durch die Schritte:
- Schätzen einer Frequenzantwort des elektrischen Energienetzes unter Berücksichtigung eines aktuellen Netzzustands des elektrischen Energienetzes und einer Laständerung mittels einer Simulationseinrichtung, und
- Ermitteln einer Offsetfrequenz (9) anhand der Frequenzantwort mittels einer Anpassungseinrichtung, und
- Anpassen einer Sollfrequenz (1) des elektrischen Energienetzes anhand der Offsetfrequenz (9) mittels einer Frequenzregelungseinrichtung, und
- Erstellen von Steuerbefehlen für steuerbare Erzeuger elektrischer Energie mittels der Frequenzregelungseinrichtung, um die angepasste Sollfrequenz (7) im elektrischen Energienetz einzustellen, und
- Erstellen eines Schaltbefehls für eine Schalteinrichtung mittels der Frequenzregelungseinrichtung, wobei der Schaltbefehl einen Zeitpunkt (t₃) für eine Schalthandlung beinhaltet.

Ferner ist eine Kontrollanordnung Gegenstand der Erfindung.

## Beschreibung

Die Erfindung betrifft ein Verfahren für eine Netzfrequenzregelung eines elektrischen Energienetzes gemäß dem Oberbegriff des Anspruchs 1 und eine Kontrollanordnung gemäß dem Oberbegriff des Anspruchs 7.

Aus der Produktbroschüre "SICAM A8000 Serie - Steuern, Fernwirken und Automatisieren auf kleinstem Raum", Siemens AG 2016, Artikel-Nr.: EMDG-B10037-00-SICAM A8000, ist ein Fernwirk- und Automatisierungsgerät bekannt, das beispielsweise als sog. "Microgrid Controller" eingesetzt werden kann. Ein solcher Microgrid Controller kann beispielsweise ein Stadtteilnetz oder ein Energieversorgungsnetz einer industriellen Anlage mit z.B. bis zu 100 MW Gesamtleistung überwachen und steuern. Dabei ist die Einhaltung einer vorgegebenen Netzfrequenz und einer vorgegebenen Netzspannung essentiell für einen stabilen Betrieb des Netzes ohne Ausfälle.

In kleineren elektrischen Netzen mit Eigenversorgung im Inselbetrieb wie z.B. Microgrids kann es bei größeren geplanten Lastsprüngen zu unerlaubt großen Frequenzabweichungen kommen. Ein Lastsprung tritt z.B. auf, wenn ein Schalter geschlossen und plötzlich ein großer Verbraucher elektrischer Energie an das elektrische Energienetz angeschlossen wird. Dies bewirkt in der Regel einen Abfall der Netzfrequenz unter die vorgesehene Nennfrequenz, also z.B. von 50 Hz auf 49,4 Hz. Solche starken Abweichungen der Netzfrequenz müssen vermieden werden, um einen sicheren und langlebigen Betrieb der Betriebsmittel und Verbraucher elektrischer Energie sicherzustellen.

Die Frequenzabweichungen könnten im schlechtesten Falle zu Stabilitätsproblemen und zum Blackout führen. Gleiches gilt auch für sehr große Energiesysteme wie beispielsweise Hochspannungsübertragungsnetze mit einer Nennspannung von 110 kV oder höher, bei denen spontane Netzänderungen und deren Auswirkung auf die Frequenz in weit entfernten Netzgebieten später messbar sind als die Information über den Ausfall in dieses Netzgebiet kommuniziert werden kann.

Daher müssen größere Lastschaltungen zuvor von Technikern bewertet werden oder ggf. durch planerische Maßnahmen unterbunden werden. Bisher werden inakzeptabel große Frequenzabweichungen verhindert, indem nach dem Lastsprung mittels einer Leitstelle oder eines lokalen Microgrid Controllers im Energienetz verfügbare Generatoren in ihrer Leistung hochgefahren werden. Dies erfolgt bisher meist manuell durch einen Techniker. Die Energienetze werden i.d.R. mit vergleichsweise großen Reserven in Bezug auf die einspeisbare Leistung betrieben, um spontan auftretende Störungen der Netzfrequenz problemlos auffangen zu können.

Ausgehend von bisherigen Verfahren zur Netzfrequenzkontrolle stellt sich an die Erfindung die Aufgabe, ein Verfahren anzugeben, mit dem Frequenzabweichungen vermindert werden.

Die Erfindung erfüllt diese Aufgabe durch ein Verfahren gemäß Anspruch 1.

Die Grundidee der Erfindung ist, durch präventive Änderung der sog. Momentanreserve vor der eigentlichen Durchführung einer Schalthandlung oder bei spontanen Laständerungen die Auswirkung auf die resultierende Frequenzabweichung von einer vorgesehenen Sollfrequenz im Energienetz zu verringern. Dazu wird zunächst die Frequenzantwort der geplanten Lastschaltung oder spontanen Laständerung für den aktuellen Netzzustand ermittelt. Danach wird an den Frequenzregler des Netzes ein Offset für die Soll-Frequenz geschickt, damit dieser voreilend die Ist-Frequenz um einen Anteil der ermittelten Frequenzabweichung anpasst. Zusätzlich wird der Zeitpunkt für den eigentlichen Start- oder Stopp-Befehl an die zu schaltende Last ermittelt. Die Zu- bzw. Abschaltung der Last erfolgt dann genau nach den ermittelten Parametern.

Die regelnden Aktoren, also zum Beispiel die Steuerungseinrichtungen von Generatoren wie z.B. Gas- oder Kohlekraftwerken, beginnen dadurch schon mit der Regelung der Frequenz im Energienetz, bevor die Störgröße (d.h. die Frequenzabweichung infolge der Schalthandlung oder spontanen Laständerung) messbar wird. Durch die zeitliche Koordination der Schalthandlungen können die Auswirkungen auf das Netz minimiert werden. Unerwünschte Verletzungen von Regelgrößen wie der Frequenz können somit verhindert und Auswirkungen auf die Systemstabilität minimiert werden.

Der Begriff Netzfrequenzregelung bezeichnet z.B. das Regeln einer Netzfrequenz im Energienetz auf z.B. eine vorgesehene Nennfrequenz von 50 Hz.

Ein elektrisches Energienetz ist z.B. ein mit Kupferkabeln verbundenes Netz von Erzeugern elektrischer Energie wie Gas-Kraftwerken, Windkraftanlagen, Photovoltaikanlagen sowie von Verbrauchern elektrischer Energie wie elektrischen Maschinen, Beleuchtung, Heizung, usw. Ferner sind dem Energienetz steuerbare Betriebsmittel wie Schaltanlagen, Stufenschalter von Transformatoren, Netzregler und Kondensatorbänke zugeordnet.

Ein aktueller Netzzustand des elektrischen Energienetzes kann beispielsweise von einer Leitstelle übermittelt werden oder selbsttätig mittels einer Zustandsschätzungseinrichtung ermittelt werden. Der Netzzustand umfasst beispielsweise Leistungsflüsse, Spannungen und Topologieinformationen, also z.B. auch Schaltstellungen von Schaltanlagen.

Die Simulationseinrichtung, die Anpassungseinrichtung und die Frequenzregelungseinrichtung können z.B. als eigene Rechnereinheiten mit Datenprozessorressourcen (CPU, GPU) und Datenspeicherressourcen (HDD, SSD) ausgebildet sein, auf denen eingebettete Software zur Durchführung des Verfahrens ausgeführt wird. Alternativ kann auch eine einzige Hardware, z.B. ein eingangs erwähnter Microgrid-Controller, mit Datenprozessor und Datenspeicher verwendet werden, wobei die Simulationseinrichtung, die Anpassungseinrichtung und die Frequenzregelungseinrichtung als Softwarekomponenten ausgebildet sind und gemeinsam auf der Hardware ausgeführt werden.

Die Simulationseinrichtung kann z.B. Funktionen zum Schätzen eines zukünftigen Netzzustands aufweisen. Der Begriff "Schätzen" kann dabei beispielsweise bedeuten, dass eine Berechnung durchgeführt wird, um den zukünftigen Netzzustand näherungsweise zu berechnen. Alternativ kann der Begriff "Schätzen" auch bedeuten, dass vorliegende Erfahrungsdaten dahingehend vorbereitet wurden, dass zukünftige Netzzustände, die in der Vergangenheit typischerweise bei bestimmten Schalthandlungen oder Laständerungen aus einem aktuellen Netzzustand folgten, in einer Datenbank abrufbar abgelegt sind. Beispielsweise kann eine sog. "lookup-table" verwendet werden.

Es wird z.B. ein aktueller Netzzustand als Eingangsgröße verwendet und ein zukünftiger Netzzustand als Ausgangsgröße ausgegeben. Der zukünftige Netzzustand kann beispielsweise auf mehrere Zeitpunkte in der Zukunft bezogen sein und für die Zeitpunkte jeweils eine erwartete Netzfrequenz angeben. Somit ergibt sich eine Zeitreihe bzw. ein Verlauf der Netzfrequenz für die Zukunft. Dieser Verlauf ist z.B. im Sinne der Erfindung eine Frequenzantwort des elektrischen Energienetzes. Es handelt sich um eine Veränderung der Netzfrequenz von z.B. 50 Hz, wenn z.B. eine große Last, d.h. ein großer Verbraucher elektrischer Energie, zugeschaltet oder abgeschaltet wird.

Eine geplante Schalthandlung ist also z.B. ein Schließen oder ein Öffnen eines Schalters, um einen großen Verbraucher elektrischer Energie an das Energienetz anzuschließen oder diesen zu trennen. Ein großer Verbraucher ist z.B. eine Industrieanlage wie ein Schmelzofen. Die Frequenzantwort wird in ihrer Dauer und maximalen Amplitude generell vor allem von der sog. Trägheit des Netzes beeinflusst.

Ein Verfahren zur Simulation eines zukünftigen Netzzustands ist z.B. aus der Software PSS-E bekannt, die in der Produktbroschüre "PSS-E - High-performance Transmission Planning and Operations Software for the Power Industry", Siemens AG, Article Number: EMDG-B10125-00-7600--PSSE Brochure, beschrieben ist. Die PSS-E Software ist jedoch ein komplexes Softwareprodukt zum Einsatz in einer zentralen Leitstelle eines Netzbetreibers, wobei die betreffenden Algorithmen jedoch grundsätzlich auch in einem lokalen Microgrid Controller implementierbar sind.

Eine Offsetfrequenz ist z.B. eine betragsmäßige Frequenzangabe in Hz, die zur Verminderung der maximalen Amplitude der Frequenzantwort dient. Zeigt der Verlauf der Frequenzantwort beispielsweise beim Zuschalten einer Last eine maximale Abweichung von - 1 Hz auf 49 Hz, so könnte als Offsetfrequenz die Hälfte der maximalen Abweichung angesetzt werden, also 0,5 Hz. Wird vor dem Zuschalten der Last die Sollfrequenz im Netz auf 50,5 Hz angehoben, so wird die maximale Abweichung (positiv oder negativ) von der Nennfrequenz von 50 Hz deutlich gemindert. Dies erhöht die Netzstabilität und die Betriebslebensdauer von Betriebsmitteln.

Die Sollfrequenz ist die Frequenz im Energienetz, die gegenwärtig eingestellt werden soll. Sie sollte im Idealfall z.B. bei einer Nennfrequenz von 50 Hz liegen, wobei kleine Abweichungen zulässig sind (z.B. von 0,1 Hz).

Steuerbare Erzeuger sind z.B. Kraftwerke mit Turbinen. Soll die Netzfrequenz erhöht werden, so kann die Leistungsabgabe eines oder mehrerer Kraftwerke erhöht werden. Dies kann z.B. erfolgen, indem in einem Gaskraftwerk mehr Gasvolumen pro Sekunde der Verbrennung in der Turbine zugeführt wird. In einem Kohlekraftwerk könnte mehr Dampf aus einem Kessel zur Dampfturbine zugeführt werden. Entsprechend kann zur Verringerung der Netzfrequenz eine Leistungsabgabe der Kraftwerke gedrosselt werden. Diese Art der Frequenzregelung auf eine eingestellte Sollfrequenz wird auch als "Automatic Generation Control" (AGC) bezeichnet und ist z.B. auf Wikipedia beschrieben (permanenter Link:
https://en.wikipedia.org/w/index.php?title=Automatic_generati on_control&oldid=985833827).

In einer Weiterbildung einer solchen AGC, insbesondere bei Industrienetzen, z.B. in einer Fabrikanlage, können auch Lasten in die Frequenzkontrolle miteinbezogen werden. Die Lasten werden dann in ihrem Energieverbrauch gedrosselt, wenn die Netzfrequenz erhöht werden soll und umgekehrt.

In einer weiteren bevorzugten Ausführungsform des erfindungsgemäßen Verfahrens wird für die Laständerung eine spontane Laständerung verwendet. Dieser Ansatz kann mit Vorteil bei räumlich sehr großen Netzen eingesetzt werden, die z.B. mehr als 500 km, bevorzugt über 1000 km Ausdehnung aufweisen. In solchen sehr großen Netzen kann eine spontane Laständerung, z.B. ein Lastabwurf oder Ausfall eines Teilnetzes infolge einer Störung an einem ersten Ort, erst mit einer deutlichen zeitlichen Verzögerung zu einer messbaren Auswirkung wie einer Frequenzänderung an einem zweiten, weit entfernten Ort des Energienetzes führen. Dauert diese Verzögerung länger als die zeitliche Dauer, die für eine Datenübermittlung zum entfernten Ort benötigt wird, so kann der Frequenzänderung bzw. der Frequenzantwort erfindungsgemäß mit einer Gegenmaßnahme entgegengewirkt werden.

In einer weiteren bevorzugten Ausführungsform des erfindungsgemäßen Verfahrens wird für die Laständerung eine geplante Schalthandlung verwendet wird.

In einer weiteren bevorzugten Ausführungsform des erfindungsgemäßen Verfahrens werden mittels einer Kommunikationseinrichtung die Steuerbefehle und der Schaltbefehl gesendet. Dies ist ein Vorteil, weil die Anpassung der Sollfrequenz im Energienetz und die zeitlich festgelegte Auslösung der Schalthandlung im realen Netz umgesetzt werden können.

Steuerbefehle und Schaltbefehle werden z.B. mittels digitaler Datentelegramme übermittelt, d.h. als Bitfolgen. Die Kommunikationseinrichtung kann unterschiedlichste Kommunikationskanäle nutzen, so z.B. eine Kommunikation über eine Stromleitung (sog. Powerline-Communication), oder per Lichtwellenleiter oder per Funk (beispielsweise nach dem 2G, 3G, 4G, 5G oder long range radio standard oder per W-LAN) oder auch per Kupferkabel (z.B. per Ethernet). Es kann z.B. auch TCP/IP für eine Datenkommunikation über das Internet angewendet werden.

Steuerbefehle werden z.B. an die steuerbaren Erzeuger gesendet und geben an, welche Soll-Leistung eingespeist werden soll. Schaltbefehle werden an Schaltanlagen wie z.B. gasisolierte Schaltanlagen oder Vakuumschaltröhren bzw. deren Steuergeräte gesendet. Schaltbefehle geben insbesondere einen Zeitpunkt für die geplante Schalthandlung an, so dass genau dann geschaltet wird, wenn die geänderte Sollfrequenz voraussichtlich eingestellt ist. Auf diese Weise werden Auswirkungen der Schalthandlung zumindest teilweise kompensiert.

In einer weiteren bevorzugten Ausführungsform des erfindungsgemäßen Verfahrens werden vor der Schätzung der Frequenzantwort mittels der Kommunikationseinrichtung eine Datennachricht mit einer geplanten Schalthandlung und eine Datennachricht mit einem aktuellen Netzzustand empfangen. Dies ist ein Vorteil, weil auf diese Weise alle benötigten Daten für die Simulationseinrichtung zur Verfügung gestellt werden.

In einer weiteren bevorzugten Ausführungsform des erfindungsgemäßen Verfahrens wird mittels der Frequenzregelungseinrichtung die Sollfrequenz um die Offsetfrequenz erhöht, wenn die Laständerung eine Zuschaltung einer Last umfasst, und die Sollfrequenz wird um die Offsetfrequenz erniedrigt, wenn die Laständerung eine Abschaltung einer Last umfasst. Dies ist ein Vorteil, weil eine maximale Abweichung (positiv oder negativ) von der Nennfrequenz deutlich gemindert wird.

Ausgehend von bisherigen Microgrid-Controllern stellt sich an die Erfindung die Aufgabe, eine Kontrollanordnung anzugeben, mit der Frequenzabweichungen verminderbar sind.

Die Erfindung erfüllt diese Aufgabe durch eine Kontrollanordnung gemäß Anspruch 7. Bevorzugte Ausführungsformen der erfindungsgemäßen Kontrollanordnung sind in den abhängigen Ansprüchen 8 bis 10 angegeben, wobei sich jeweils die gleichen Vorteile wie eingangs für das erfindungsgemäße Verfahren erläutert ergeben.

In einer bevorzugten Ausführungsform der erfindungsgemäßen Kontrollanordnung weist das Energienetz ein industrielles Energieversorgungsnetz auf. Dies ist ein Vorteil, weil in industriellen Energieversorgungsnetzen, die z.B. ein Stahlwerk oder eine Automobilfabrik mit elektrischer Energie versorgen können, häufig große Verbraucher wie Schmelzöfen oder Pumpen zu- oder ausgeschaltet werden müssen.

In einer weiteren bevorzugten Ausführungsform der erfindungsgemäßen Kontrollanordnung weist das Energienetz ein Mittelspannungsnetz mit einer Nennspannung von 1 kV bis 52 kV auf.

In einer weiteren bevorzugten Ausführungsform der erfindungsgemäßen Kontrollanordnung weist das Energienetz ein Niederspannungsnetz mit einer Nennspannung bis 1 kV auf.

In einer weiteren bevorzugten Ausführungsform der erfindungsgemäßen Kontrollanordnung weist das Energienetz ein Hochspannungsnetz mit einer Nennspannung über 52 kV auf.

In einer weiteren bevorzugten Ausführungsform der erfindungsgemäßen Kontrollanordnung ist die Simulationseinrichtung als Software-Applikation in einer Datenverarbeitungs-Cloud ausgebildet. Dies ist ein Vorteil, weil beispielsweise nur noch die nötige Hardware zum Anschließen von nicht Internetfähigen Messgeräten und Betriebsmitteln sowie von Generatoren vor Ort lokal installiert werden muss. Im Extremfall genügt es, ein Gerät zur Datenaggregation, Datenvorverarbeitung und Datenkommunikation vor Ort und lokal im Energienetz vorzusehen. Dieses sog. "Edge Device" kann die Kommunikation zu einer entfernt betrieben Cloud sicherstellen. Eine Cloud im Sinne der Erfindung ist ein per Datenkommunikation verbundenes Netzwerk von Datenspeicherressourcen wie z.B. Magnetfestplatten (HDD) oder Solid state disks (SSD) sowie Datenprozessorressourcen wie z.B. Central Processing Units (CPU) oder Graphics Processing Units (GPU). Eine Cloud ist leicht skalierbar, wenn ein vermehrter Rechenbedarf oder ein größerer Datenspeicherplatz erforderlich sind. Updates und Sicherheitspatches können leicht zentral eingespielt werden. Die Cloud-Infrastruktur mit Rechenzentren wird von einem Drittanbieter gemanagt und gewartet, so dass sich ein Energienetzbetreiber nicht um zusätzliche Rechnerhardware kümmern muss, was Kosten einspart.

Zur besseren Erläuterung der Erfindung zeigen in schematischer Darstellung die
- Figur 1: einen zeitlichen Verlauf einer Netzfrequenz nach einer Schalthandlung,
- Figur 2: einen zeitlichen Verlauf der Netzfrequenz nach der Schalthandlung unter Anwendung des erfindungsgemäßen Verfahrens.

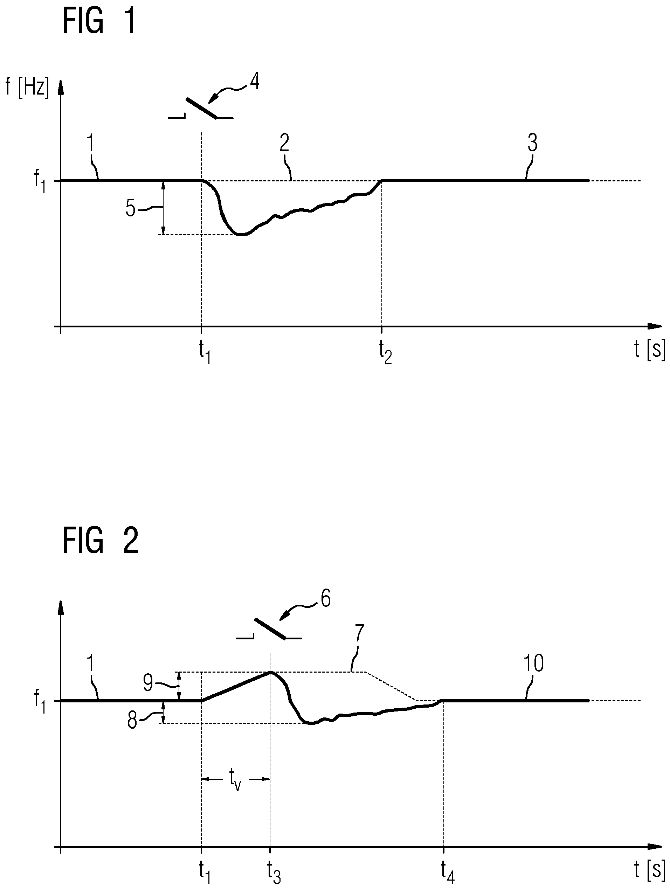

Die Figur 1 zeigt einen zeitlichen Verlauf einer Netzfrequenz f eines Energienetzes. Auf der horizontalen Achse ist die Zeit in Sekunden aufgetragen. Zunächst ist die Netzfrequenz konstant bei f₁ eingestellt und entspricht der von der Frequenzregelungseinrichtung vorgegebenen Sollfrequenz 1. Zum Zeitpunkt t₁ wird eine große Last von 10 MW Leistungsaufnahme zugeschaltet (Bezugszeichen 4). Dies bewirkt eine Frequenzantwort, wobei die Netzfrequenz unter die Sollfrequenz 2 absackt und diese erst zum Zeitpunkt t₂ wieder erreicht und im weiteren Verlauf 3 hält. Die Frequenzantwort hat eine maximale Amplitude der Abweichung zur Sollfrequenz 2, die mit dem Bezugszeichen 5 gekennzeichnet ist.

Die Figur 2 zeigt einen anderen zeitlichen Verlauf einer Netzfrequenz f eines Energienetzes, wobei das erfindungsgemäße Verfahren angewendet wird. Zunächst ist die Netzfrequenz konstant bei f₁ eingestellt und entspricht der von der Frequenzregelungseinrichtung vorgegebenen Sollfrequenz 1. Zum Zeitpunkt t₁ wird eine um eine Offsetfrequenz 9 erhöhte neue Sollfrequenz 7 vorgegeben, die zum Zeitpunkt t₃ erreicht wird. Es ergibt sich also im Vergleich zur Figur 1 eine Zeitverzögerung tᵥ = t₃ -t₁, bis die Schalthandlung ausgelöst werden kann.

Am Zeitpunkt t₃ wird die große Last von 10 MW Leistungsaufnahme zugeschaltet (Bezugszeichen 6). Dies bewirkt eine Frequenzantwort, wobei die Netzfrequenz unter die neue Sollfrequenz 7 absackt und diese erst zum Zeitpunkt t₄ wieder erreicht und im weiteren Verlauf 10 hält. Die Frequenzantwort hat eine maximale Amplitude der Abweichung zur Sollfrequenz 7, die mit dem Bezugszeichen 8 gekennzeichnet ist. Durch das erfindungsgemäße Verfahren wurde folglich die maximale Amplitude der Frequenzantwort bzw. die maximale Abweichung zur ursprünglich eingestellten Sollfrequenz f₁ wesentlich verringert, d.h. die maximale Amplitude der Abweichung 8 gemäß Figur 2 ist viel kleiner als die maximale Amplitude der Abweichung 5 gemäß Figur 1.

## Patentansprüche

1. Verfahren für eine Netzfrequenzregelung eines elektrischen Energienetzes, **gekennzeichnet durch** die Schritte:
- Schätzen einer Frequenzantwort des elektrischen Energienetzes unter Berücksichtigung eines aktuellen Netzzustands des elektrischen Energienetzes und einer Laständerung mittels einer Simulationseinrichtung, und
- Ermitteln einer Offsetfrequenz (9) anhand der Frequenzantwort mittels einer Anpassungseinrichtung, und
- Anpassen einer Sollfrequenz (1) des elektrischen Energienetzes anhand der Offsetfrequenz (9) mittels einer Frequenzregelungseinrichtung, und
- Erstellen von Steuerbefehlen für steuerbare Erzeuger elektrischer Energie mittels der Frequenzregelungseinrichtung, um die angepasste Sollfrequenz (7) im elektrischen Energienetz einzustellen, und
- Erstellen eines Schaltbefehls für eine Schalteinrichtung mittels der Frequenzregelungseinrichtung, wobei der Schaltbefehl einen Zeitpunkt (t₃) für eine Schalthandlung beinhaltet.

2. Verfahren nach Anspruch 1,
**dadurch gekennzeichnet, dass**
für die Laständerung eine spontane Laständerung verwendet wird.

3. Verfahren nach Anspruch 1,
**dadurch gekennzeichnet, dass**
für die Laständerung eine geplante Schalthandlung verwendet wird.

4. Verfahren nach einem der vorhergehenden Ansprüche, **dadurch gekennzeichnet, dass**
mittels einer Kommunikationseinrichtung die Steuerbefehle und der Schaltbefehl gesendet werden.

5. Verfahren nach Anspruch 3 oder 4,
**dadurch gekennzeichnet, dass**
vor der Schätzung der Frequenzantwort mittels der Kommunikationseinrichtung eine Datennachricht mit einer geplanten Schalthandlung und eine Datennachricht mit einem aktuellen Netzzustand empfangen wird.

6. Verfahren nach einem der vorhergehenden Ansprüche, **dadurch gekennzeichnet, dass** mittels der Frequenzregelungseinrichtung die Sollfrequenz (1) um die Offsetfrequenz (9) erhöht wird, wenn die Laständerung eine Zuschaltung einer Last umfasst (6),
und die Sollfrequenz um die Offsetfrequenz erniedrigt wird, wenn die Laständerung eine Abschaltung einer Last umfasst.

7. Kontrollanordnung für eine Netzfrequenzregelung eines elektrischen Energienetzes, **gekennzeichnet durch**:
eine Simulationseinrichtung, die ausgebildet ist, eine Frequenzantwort des elektrischen Energienetzes unter Berücksichtigung eines aktuellen Netzzustands des elektrischen Energienetzes und einer Laständerung zu schätzen, und
eine Anpassungseinrichtung, die ausgebildet ist,
eine Offsetfrequenz (9) anhand der Frequenzantwort zu ermitteln, und
eine Frequenzregelungseinrichtung, die ausgebildet ist, die Sollfrequenz (1) des elektrischen Energienetzes anhand der Offsetfrequenz (9) anzupassen, und
Steuerbefehle für steuerbare Erzeuger elektrischer Energie zu erstellen, um die angepasste Sollfrequenz (7) im elektrischen Energienetz einzustellen, und
einen Schaltbefehl für eine Schalteinrichtung zu erstellen,
wobei der Schaltbefehl einen Zeitpunkt (t₃) für eine Schalthandlung beinhaltet.

8. Kontrollanordnung nach Anspruch 7,
**dadurch gekennzeichnet, dass**
eine Kommunikationseinrichtung ausgebildet ist, die Steuerbefehle und den Schaltbefehl zu senden.

9. Kontrollanordnung nach Anspruch 7 oder 8,
**dadurch gekennzeichnet, dass**
die Kommunikationseinrichtung ausgebildet ist, vor der Schätzung der Frequenzantwort eine Datennachricht mit einer Laständerung infolge einer geplanten Schalthandlung und eine Datennachricht mit einem aktuellen Netzzustand zu empfangen.

10. Kontrollanordnung nach einem der Ansprüche 7 bis 9, **dadurch gekennzeichnet, dass**
die Frequenzregelungseinrichtung ausgebildet ist, die Sollfrequenz (7) um die Offsetfrequenz (9) zu erhöhen, wenn die Laständerung eine Zuschaltung einer Last (6) umfasst,
und die Sollfrequenz um die Offsetfrequenz zu erniedrigen, wenn die Laständerung eine Abschaltung einer Last umfasst.

11. Kontrollanordnung nach einem der Ansprüche 7 bis 10, **dadurch gekennzeichnet, dass**
das Energienetz ein industrielles Energieversorgungsnetz aufweist.

12. Kontrollanordnung nach einem der Ansprüche 7 bis 11, **dadurch gekennzeichnet, dass**
das Energienetz ein Mittelspannungsnetz mit einer Nennspannung von 1 kV bis 52 kV aufweist.

13. Kontrollanordnung nach einem der Ansprüche 7 bis 12, **dadurch gekennzeichnet, dass**
das Energienetz ein Niederspannungsnetz mit einer Nennspannung bis 1 kV aufweist.

14. Kontrollanordnung nach einem der Ansprüche 7 bis 13, **dadurch gekennzeichnet, dass**
das Energienetz ein Hochspannungsnetz mit einer Nennspannung über 52 kV aufweist.

15. Kontrollanordnung nach einem der Ansprüche 7 bis 14, **dadurch gekennzeichnet, dass**
die Simulationseinrichtung als Software-Applikation in einer Datenverarbeitungs-Cloud ausgebildet ist.

## Geänderte Patentansprüche

### Geänderte Patentansprüche gemäss Regel 137(2) EPÜ.

1. Verfahren für eine Netzfrequenzregelung eines elektrischen Energienetzes, **gekennzeichnet durch** die Schritte:
- Schätzen einer Frequenzantwort des elektrischen Energienetzes unter Berücksichtigung eines aktuellen Netzzustands des elektrischen Energienetzes und einer Laständerung mittels einer Simulationseinrichtung, und
- Ermitteln einer Offsetfrequenz (9) anhand der Frequenzantwort mittels einer Anpassungseinrichtung, und
- Anpassen einer Sollfrequenz (1) des elektrischen Energienetzes anhand der Offsetfrequenz (9) mittels einer Frequenzregelungseinrichtung, und
- Erstellen von Steuerbefehlen für steuerbare Erzeuger elektrischer Energie mittels der Frequenzregelungseinrichtung, um die angepasste Sollfrequenz (7) im elektrischen Energienetz einzustellen, und
- Erstellen eines Schaltbefehls für eine Schalteinrichtung des elektrischen Energienetzes mittels der Frequenzregelungseinrichtung, wobei der Schaltbefehl einen Zeitpunkt (t₃) für eine Schalthandlung beinhaltet.

2. Verfahren nach Anspruch 1,
**dadurch gekennzeichnet, dass**
für die Laständerung eine spontane Laständerung verwendet wird.

3. Verfahren nach Anspruch 1,
**dadurch gekennzeichnet, dass**
für die Laständerung eine geplante Schalthandlung verwendet wird.

4. Verfahren nach einem der vorhergehenden Ansprüche,
**dadurch gekennzeichnet, dass**
mittels einer Kommunikationseinrichtung die Steuerbefehle und der Schaltbefehl gesendet werden.

5. Verfahren nach Anspruch 4,
**dadurch gekennzeichnet, dass**
vor der Schätzung der Frequenzantwort mittels der Kommunikationseinrichtung eine Datennachricht mit einer geplanten Schalthandlung und eine Datennachricht mit einem aktuellen Netzzustand empfangen wird.

6. Verfahren nach einem der vorhergehenden Ansprüche,
**dadurch gekennzeichnet, dass** mittels der Frequenzregelungseinrichtung die Sollfrequenz (1) um die Offsetfrequenz (9) erhöht wird, wenn die Laständerung eine Zuschaltung einer Last umfasst (6),
und die Sollfrequenz um die Offsetfrequenz erniedrigt wird, wenn die Laständerung eine Abschaltung einer Last umfasst.

7. Kontrollanordnung für eine Netzfrequenzregelung eines elektrischen Energienetzes, **gekennzeichnet durch**:
eine Simulationseinrichtung, die ausgebildet ist, eine Frequenzantwort des elektrischen Energienetzes unter Berücksichtigung eines aktuellen Netzzustands des elektrischen Energienetzes und einer Laständerung zu schätzen, und
eine Anpassungseinrichtung, die ausgebildet ist,
eine Offsetfrequenz (9) anhand der Frequenzantwort zu ermitteln, und
eine Frequenzregelungseinrichtung, die ausgebildet ist, die Sollfrequenz (1) des elektrischen Energienetzes anhand der Offsetfrequenz (9) anzupassen, und
Steuerbefehle für steuerbare Erzeuger elektrischer Energie zu erstellen, um die angepasste Sollfrequenz (7) im elektrischen Energienetz einzustellen, und
einen Schaltbefehl für eine Schalteinrichtung des elektrischen Energienetzes zu erstellen, wobei der Schaltbefehl einen Zeitpunkt (t₃) für eine Schalthandlung beinhaltet.

8. Kontrollanordnung nach Anspruch 7,
**dadurch gekennzeichnet, dass**
eine Kommunikationseinrichtung ausgebildet ist, die Steuerbefehle und den Schaltbefehl zu senden.

9. Kontrollanordnung nach Anspruch 7 oder 8,
**dadurch gekennzeichnet, dass**
die Kommunikationseinrichtung ausgebildet ist, vor der Schätzung der Frequenzantwort eine Datennachricht mit einer Laständerung infolge einer geplanten Schalthandlung und eine Datennachricht mit dem aktuellen Netzzustand zu empfangen.

10. Kontrollanordnung nach einem der Ansprüche 7 bis 9,
**dadurch gekennzeichnet, dass**
die Frequenzregelungseinrichtung ausgebildet ist, die Sollfrequenz (7) um die Offsetfrequenz (9) zu erhöhen, wenn die Laständerung eine Zuschaltung einer Last (6) umfasst,
und die Sollfrequenz um die Offsetfrequenz zu erniedrigen, wenn die Laständerung eine Abschaltung einer Last umfasst.

11. Kontrollanordnung nach einem der Ansprüche 7 bis 10,
**dadurch gekennzeichnet, dass**
das Energienetz ein industrielles Energieversorgungsnetz aufweist.

12. Kontrollanordnung nach einem der Ansprüche 7 bis 11,
**dadurch gekennzeichnet, dass**
das Energienetz ein Mittelspannungsnetz mit einer Nennspannung von 1 kV bis 52 kV aufweist.

13. Kontrollanordnung nach einem der Ansprüche 7 bis 12,
**dadurch gekennzeichnet, dass**
das Energienetz ein Niederspannungsnetz mit einer Nennspannung bis 1 kV aufweist.

14. Kontrollanordnung nach einem der Ansprüche 7 bis 13,
**dadurch gekennzeichnet, dass**
das Energienetz ein Hochspannungsnetz mit einer Nennspannung über 52 kV aufweist.

15. Kontrollanordnung nach einem der Ansprüche 7 bis 14,
**dadurch gekennzeichnet, dass**
die Simulationseinrichtung als Software-Applikation in einer Datenverarbeitungs-Cloud ausgebildet ist.
